# EUROPEAN PATENT APPLICATION

(11) **EP 0 919 996 A2**
(43) Date of publication of application: **02.06.1999**
(21) Application number: 98122389.4
(22) Date of filing: 25.11.1998
(51) Int. Cl.: G11B 7/24, G11B 11/10

(54) **Phase change optical disk having a reflection layer of noble metal, and optical data storage system therefor**

(30) Priority: 25.11.1997 KR 9762767
(71) Applicant: Samsung Electronics Co., Ltd., Suwon-city, Kyungki-do (KR)
(72) Inventor: Kim, Seong-Sue, Seocho-gu, Seoul (KR)
(74) Representative: Grünecker, Kinkeldey, Stockmair & Schwanhäusser Anwaltssozietät

(57) **Abstract**

A high-density phase change optical disk used as DVD-RAM, includes a reflection layer made of a noble metal which have characteristics of high thermal conductivity, high reflectivity and high melting temperature, such as copper (Cu), silver (Ag) or gold (Au). Accordingly, the phase change optical disk according to the present invention largely increases the number of times of overwriting, compared with the phase change optical disk having a reflection layer made of aluminum (Al). Also, the cross-erasing phenomenon that when writing information on a target track, information recorded on a track adjacent to the target track is deleted, is remarkably reduced.

## Description

### BACKGROUND OF THE INVENTION

The present invention relates to a phase change optical disk capable of being repeated writing and reading. More particularly, the invention relates to a high-density phase change optical disk capable of increasing the number of times of overwriting and reducing cross-erasing in a land/groove recording method, by using a reflection layer made of a novel material, and an optical data storage system therefor.

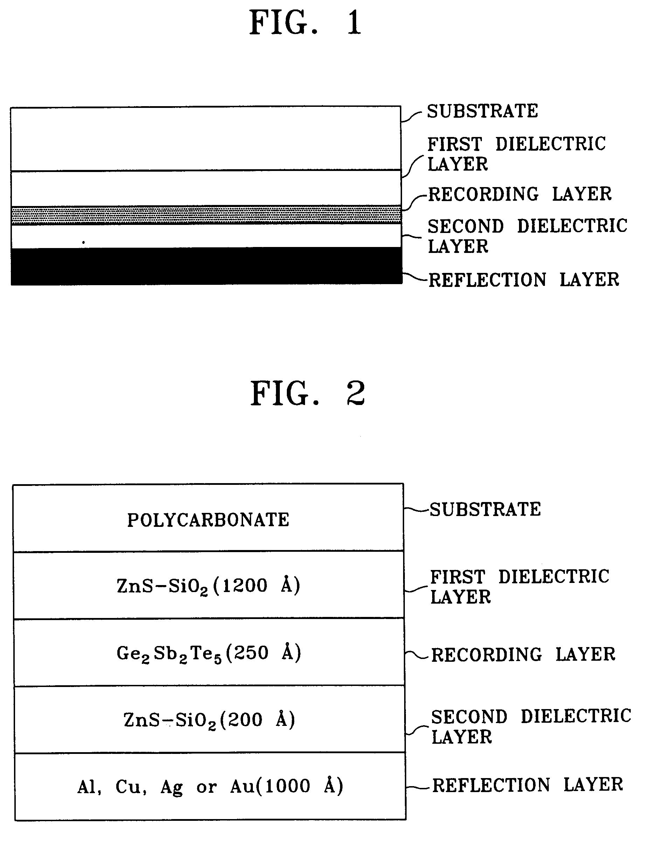

A general phase change optical disk, as shown in Fig. 1, is comprised of a substrate, and multi-layered thin films which are deposited in sequence starting from a side toward which a laser beam is incident. The multi-layered thin films include a first dielectric layer, a recording layer, a second dielectric layer and a reflection layer which are deposited in sequence starting from the substrate. In a phase change optical disk having the same layer structure as that shown in Fig. 1, the reflection layer reflects a laser light beam transmitted through the recording layer, back to the recording layer. Due to such a reflection function of the reflection layer, a reflectivity and a light energy efficiency of the optical disk are heightened. The recording layer which has been melted during writing is quickly cooled by a high thermal conductivity of the reflection layer. As a result, marks in the recording layer are changed from a crystalline state to an amorphous state, and thus information can be written on the phase change optical disk.

So far, aluminium (Al) has been used as a material of the reflection layer in a phase change optical disk. When overwriting is performed by about 15,000 times with respect to a phase change optical disk having a reflection layer made of Al, an amount of jitter exceeds 15%. The jitter is used for measuring the accuracy of a reproduced signal. It is difficult to use an optical disk having an amount of jitter exceeding 15% or more, as a recording medium.

Also, when a land/groove recording method is used in a phase change optical disk having a reflection layer made of Al, the more the number of overwriting times increases, the greater cross-erasing occurs due to the loss of the part of pre-written data.

### SUMMARY OF THE INVENTION

To solve the above problems, it is an object of the present invention to provide optical disks using a novel material as a reflection layer, thereby remarkably increasing the number of times of overwriting than that of an existing optical disk using a reflection layer made of Al.

Another object of the invention is to provide an optical data storage system for the above optical disks.

To accomplish the above object of the present invention, there is provided an optical disk comprising a substrate, and multi-layered films applied on a side surface of the substrate. The films includes a dielectric layer applied on the substrate, a recording layer applied on the dielectric layer, a dielectric layer applied on the recording layer and having a thichkness larger than 100Å and smaller than 350Å, and a reflection layer applied on the dielectric layer and made of a metal.

Preferably, the reflection layer is made of one selected from copper (Cu), gold (Au) and silver (Ag).

For another object of the invention, there is provided an optical data storage system comprising an optical disk including a substrate, and at least a film applied on a side surface of the substrate and having a recording layer applied over the substrate, a dielectric layer applied on the recording layer and having a thickness larger than 100Å and smaller than 350Å, and a reflection layer applied on the dielectric layer and made of a metal; and an optical disk drive for using a laser power of 10 ∼ 12mW during writing on the optical disk and for using a laser power of about 1mW during reading from the optical disk.

### BRIEF DESCRIPTION OF THE DRAWINGS

The above object and other advantages of the present invention will become more apparent by describing in detail the structures and operations of the present invention with reference to the accompanying drawings, in which:
Fig. 1 is a cross-sectional view showing structure of a general phase change optical disk;
Fig. 2 is a cross-sectional view showing structure of a phase change optical disk used for explaining an experimental test of the present invention;
Fig. 3 is a graph showing changes of the number of times of overwriting with respect to the jitter characteristics in phase change optical disks having a reflection layer made of Al, Cu, Ag, or Au;
Fig. 4 is a graph showing changes of jitter with respect to the number of times of overwriting in the adjacent land or groove of a phase change optical disk having a land/groove structured substrate.
Fig. 5 is a graph showing wavelength-reflectivity characteristics in a red light region with respect to a single layer made of Al, Cu, Ag, or Au;
Fig. 6 is a graph showing a change of jitter with respect to the number of times of overwriting when a second dielectric layer being adjacent a reflection layer has a different thickness;
Fig. 7 shows characteristics of cross-erasing with respect to track pitch in a phase change optical disk having a reflection layer of Al; and
Fig. 8 is an optical data storage system according to the present invention for a phase change optical disk and a magneto-optical disk.

### DETAILED DESCRIPTION OF THE INVENTION

The present invention will be described in detail with reference to the accompanying drawings.

Both the number of times of overwriting and the cross-erasing have been known as essential technical matters for realization of 4.7Gbyte DVD-RAM using a phase change optical disk. In the present invention, it is noted that these matters greatly rely upon a reflection layer. Also, it is found that a phase change optical disk is fabricated using a new metallic reflection layer, thereby increasing the number of times of overwriting and remarkably reducing cross-erasing.

Copper (Cu), silver (Ag) and gold (Au) which are proposed as materials of a reflection layer by the present invention and an existing aluminum (Al) will be compared with in view of physical properties as follows.

Al has a thermal conductivity of about 2.37W/cm/deg/sec, while Cu. Ag and Au have thermal conductivities of about 4.01W/cm/deg/sec, about 4.29W/cm/deg/sec, and about 3.17W/cm/deg/sec, respectively. In other words, noble metals such as Cu, Ag and Au have a thermal conductivity higher by 33%∼69% than that of Al. The melting points of Cu, Ag and Au are about 1085°C, about 961°C and about 865°C, respectively, which are much higher than Al having a melting point of about 660.5°C. Thus, degradation of a reflection layer during repeated writing is prevented thereby remarkably reducing an increase of jitter according to an increase in the number of times of overwriting. The refractive indices, thermal conductivities and melting points of these materials are summarized in the following Table 1.

**Table 1**

| | Al | Au | Ag | Cu |
|---|---|---|---|---|
| n (λ=680nm) | 2.16+7.16i | 0.16+3.08i | 0.14+4.44i | 0.21+4.05i |
| κ (W/cm/deg/sec) | 2.37 | 3.17 | 4.29 | 4.01 |
| Tm(K) | 933.5 | 1338 | 1235 | 1358 |

Here, n is a numerical value of a refractive index, κ is a thermal conductivity, and Tm is a melting point expressed a Kelvin absolute temperature scale (K).

Thus, when one selected from Cu, Ag and Au is used as a reflection layer of a phase change optical disk, the reflection layer which has a high thermal conductivity abruptly absorbs heats of a melted recording layer during writing. Accordingly, the recording layer cools suddenly. As a result, a material flow which becomes a main cause to increase a jitter during repeated writing, that is, a phenomenon of movement of a melted material due to ununiformity of heats in the recording layer is suppressed. Here, jitter which is a quantity representing a degree of deviation of a written mark position from a desired mark position on a medium, represents the accuracy of a reproduced signal. Thus, in a phase change optical disk where a temperature rises to 650°C or more, particularly 1000°C during writing, Cu, Ag and Au to be used as a reflection layer have a more thermally stable characteristics than Al. With the above-described characteristics, a phase change optical disk having a reflection layer made of one selected from Cu, Ag and Au has a better overwriting and cross-erasing characteristics than a phase change optical disk having a reflection layer made of Al.

Meanwhile, the second dielectric layer has a thermal conductivity relatively much lower than the reflection layer, and is used for properly adjusting a reflectivity of the reflection layer. When one selected from Cu, Ag and Au is used as a reflection layer, a second dielectric layer placed between the reflection layer and a recording layer preferably has a thickness larger than 100Å and smaller than 350Å. Thus, the number of times of overwriting can further increase and cross-erasing can further be reduced.

The features involving the number of times of overwriting and cross-erasing between a phase change optical disk having a reflection layer made of one selected from Cu, Ag and Au and a phase change optical disk having a reflection layer made of an existing Al, will be described through the following experimental test.

### Experimental test

Four phase change optical disks, each having a reflection layer made of Al, Au, Ag and Cu, respectively, have been fabricated by a RF/DC sputtering, using a substrate made of polycarbonate and having a track pitch of 0.58 µm so that a land/groove recording method can be used. Fig. 2 is a cross-sectional view showing of a layer structure possessed by the phase change optical disks manufactured for an experiment of the present invention. In Fig. 2, a reflection layer has a thickness of about 1000Å, which is made of one selected from Al, Au, Ag and Cu. The thickness of the substrate is about 0.6mm. The first and second dielectric layers are constituted by ZnS (80 at. %)-SiO₂(20 at. %). The thickness of the first dielectric layer is about 1200Å, and that of the second dielectric layer is about 200Å. The recording layer is constituted by Ge₂Sb₂Te₅(chemical composition) and the thickness thereof is 250Å.

In order to test the four phase change optical disks having a reflection layer made of Al, Au, Ag and Cu, respectively, write powers of 13.3, 13.0, 14.5 and 15.2mW and erasing powers of 5.0, 5.2, 6.5 and 6.2 mW have been used, respectively. These powers have been determined so that a minimum jitter value is obtained after 100-times overwriting.

The jitters have been measured with respect to the number of times of overwriting up to 10⁵. The cross-erasing has been estimated by measuring the sizes of jitter and envelop while increasing the number of overwriting times at one of adjacent land or groove. These measurements have been performed by a dynamic tester of model DDU-100 made by PULSTEC Inc. with a wavelength of 680nm, using an eight-to-fourteen modulation signal having a signal period T of 34.27nsec and a linear velocity of 6.1m/sec in a phase change optical disk.

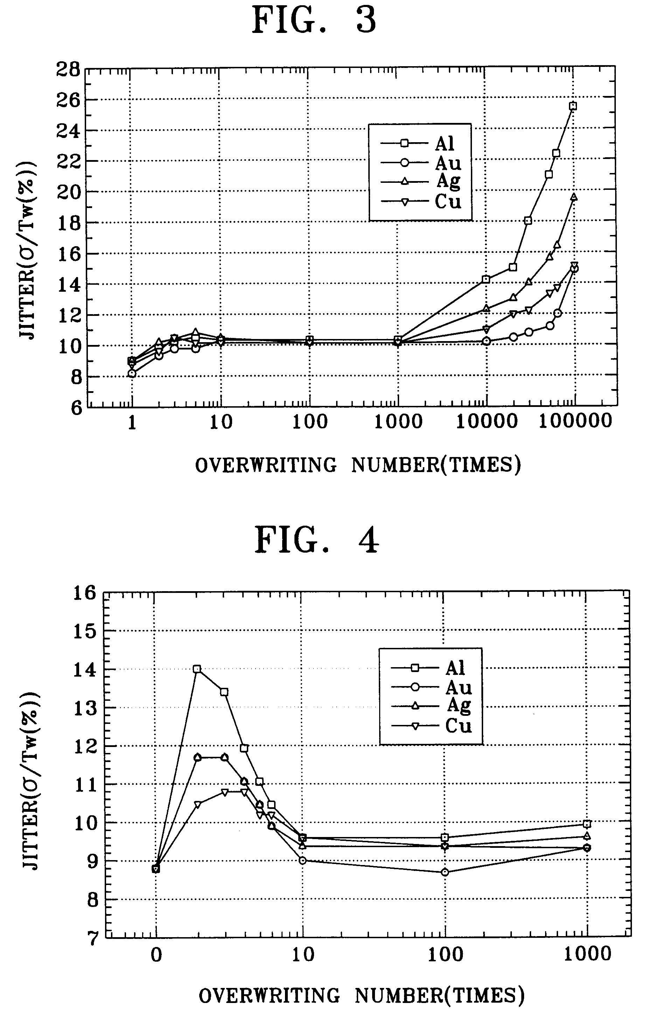

Fig. 3 shows changes of the jitter with respect to the number of overwriting times in the phase change optical disks initialized by melting and crystallization.

When initialized by melting and crystallization, a phase change optical disk having a reflection layer made of Cu or Au, as shown in Fig. 3, has a jitter value which is smaller than 12% until overwriting of 6 × 10⁴ times, and has a jitter value of about 15.0% after overwriting of 10⁵ times. Meanwhile, a phase change optical disk having a reflection layer, made of Al, has a jitter value of about 15% until overwriting of 15,000 times, and a jitter value of about 26% after overwriting of 10⁵ times. Thus, the optical disks having a reflection layer made of one selected from Cu, Ag and Au according to the present invention has an excellent cyclabilities, in comparison with an existing optical disk having a reflection layer made of Al.

Fig. 4 shows changes of the jitter measured while increasing the number of overwriting times in the adjacent land or groove, and particularly which shows changes of the jitter in case that a substrate having a track pitch of 0.54 µm is used. The phase change optical disks having a reflection layer made of one selected from Cu, Ag and Au maintains a considerably small jitter value in comparison with a phase change optical disk having a reflection layer made of Al. Such a jitter value is maintained smaller than 12% in the entire overwriting range shown in Fig. 4. Therefore, the phase change optical disk having a reflection layer of one selected from Cu, Ag and Au allows to lessen data loss in an adjacent track during writing, in comparison with a phase change optical disk having a reflection layer of Al.

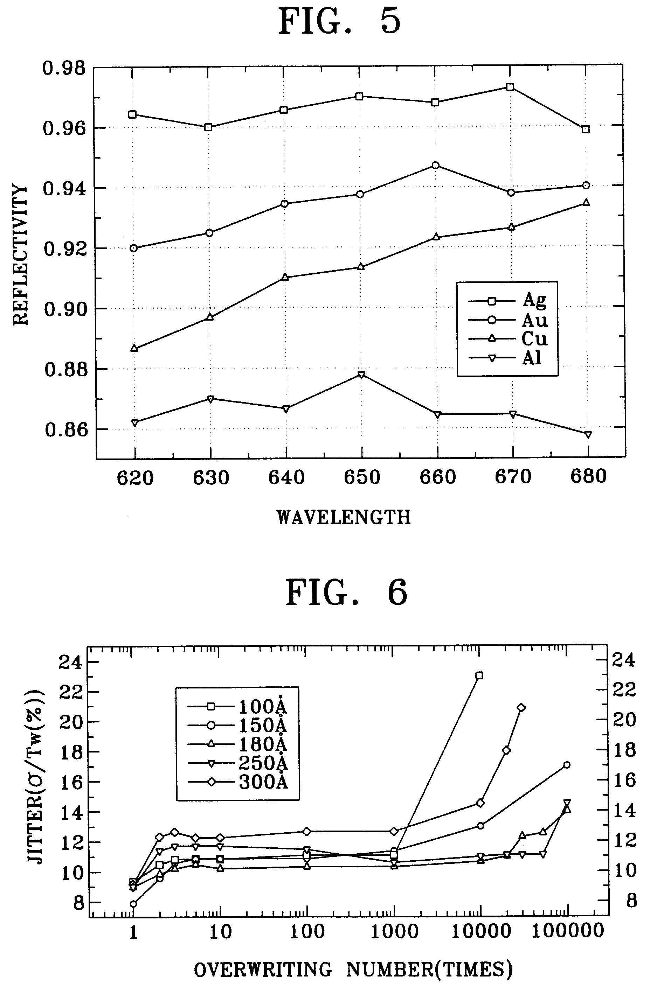

Fig. 5 shows reflectivities in a red light region with respect to single layers made of Al, Cu, Ag, and Au, respectively.

As can be seen from Fig. 5, Cu, Ag and Au have a higher reflectivity than Al, respectively. Therefore, in comparison with a phase change optical disk having a reflection layer made of Al, a phase change optical disk having a reflection layer made of one selected from Cu, Ag and Au absorbs a more light energy in a recording layer and absorbs a less light energy in a reflection layer.

Fig. 6 shows a change of jitter with respect to the number of times of overwriting when a second dielectric layer contacting with a reflection layer has a different thickness. Particularly, Fig. 6 shows a jitter change measured with respect to a phase change optical disk having a reflection layer made of Cu.

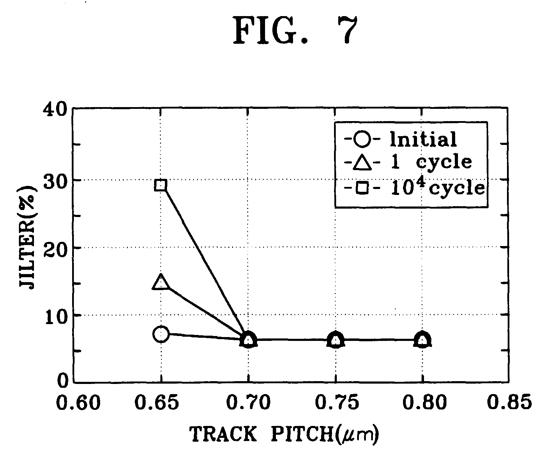

Fig. 7 shows characteristics of cross-erasing with respect to track pitches in a phase change optical disk having a reflection layer made of Al. The diagram shown in Fig. 7 is disclosed on a paper of Matsushita Co., Ltd., which is contained at page 33 in a collection of papers of cooperation symposium held by ISOM (International Symposium on Optical Memory) and ODS(Optical Data Storage), 1996. Fig. 7 shows generation of jitter of 15% or more when a track pitch is less than 0.7 µm. That is, it shows that data in an adjacent track is erased.

Concerning writing on adjacent tracks, when the characteristic diagram shown in Fig. 4 is compared with that of Fig. 7, the phase change optical disk of Fig. 2 having a reflection layer of Al is similar to that of Fig. 7 and has jitter value increased by 5%. However, the phase change optical disk having a reflective of a noble metal remarkably reduces an amount of increase of jitter, and has an amount of jitter increased by about 2%.

As can be seen from the experimental test, the optimal material in view of both performance and reliability is Au among Cu, Ag and Au.

In the above-described experimental test, a phase change optical disk having a single thin film composed of a first dielectric layer, a recording layer, a second dielectric layer and a reflection layer has been described. However, it is apparent to a person skilled in the art that the present invention can be applied to a phase change optical disk having a plurality of thin films.

Meanwhile, the above reflection layer of a noble metal can be used in a magneto-optical disk. In case of magneto-optical disks, a temperature of a magneto-optic layer having a high magnetic coercivity in the ambient temperature is increased by a focused laser beam. As a result, at a portion on which laser beam is focused, the magnetic coercivity decreases and thus information is written on that portion of the magneto-optic layer. Thus, the reflection layer of a noble metal according to the present invention is used as a reflection layer in a magneto-optical disk composed of a substrate, dielectric layers, magneto-optic layer and reflection layer.

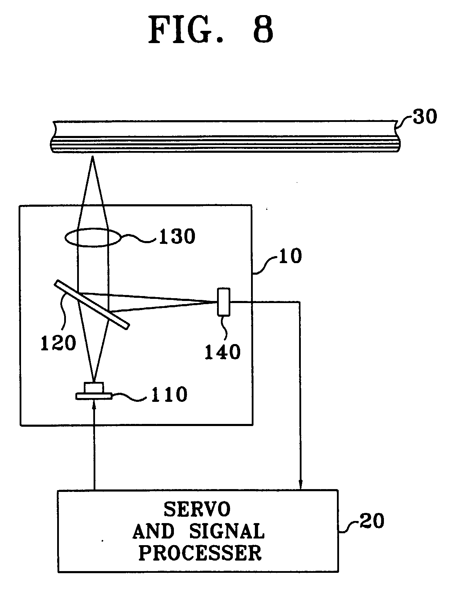

Fig. 8 shows an optical disk drive according to the present invention. The optical disk drive shown in Fig. 8 comprises an optical pickup 10, and a servo and signal processor 20. The optical pickup 10 includes an optical source 110, a beam splitter 120, an objective lens 130 and an optical detector 140. The disk drive of Fig. 8 writes and/or reads information on a loaded disk 30. The loaded disk 30 is a phase change optical disk having a track pitch less than or equal to about 0.6 µm or a magneto-optical disk. The servo and signal processor 20 supplies a voltage appropriate to writing or reading, to the optical source 110. The optical source 110 responsive to the voltage supplied from the servo and signal processor 20 generates a laser beam having a wavelength less than or equal to 690nm. When writing, the optical source 110 generates a laser beam stronger than that when reading. Therefore, a laser power in the disk has a range of 10 ∼ 12mW when writing information on the phase change optical disk and has about 1mW when reading data from the phase change optical disk. An optical path which is formed by the laser beam emitted from the optical source 110 is apparent to one skilled in the art, and thus explanation to the optical pickup 100 is omitted.

As described above, a phase change or magneto-optical optical disk according to the present invention has a reflection layer made of noble metals such as Cu, Ag and Au instead of Al. A dielectric layer contacting with a reflection layer has a thickness larger than 100Å and smaller than 350Å. As a result, the phase change optical disk according to the present invention does not exceed a jitter value of 15% with respect to the overwriting of 10⁵ times or more. Even a land/groove recording method is used, the present invention provides a much more excellent cross-erasing characteristic compared with an optical disk having a reflection layer made of Al. Thus, when a phase change optical disk according to the present invention is used as a 4.7Gbyte DVD-RAM, the present invention can maintain a much higher reliability as a recording medium, compared with an existing phase change optical disk having a reflection layer made of Al.

## Claims

1. An optical disk comprising.
a substrate; and
at least a film applied on a side surface of the substrate and including,
a recording layer applied over the substrate;
a dielectric layer applied on the recording layer and having a thichkenss larger than 100Å and smaller than 350Å; and
a reflection layer applied on the dielectric layer and made of a metal.

2. The optical disk according to claim 1, wherein the reflection layer is made of one selected from copper (Cu), gold (Au) and silver (Ag).

3. The optical disk according to claim 1, wherein the reflection layer is preferably made of Au.

4. The optical disk according to claim 1, wherein the optical disk is a phase change optical disk.

5. The optical disk according to claim 1, wherein the dielectric layer is made of ZnS (of 80 at. %)-SiO₂(20 at. %), and the recording layer is made of Ge₂Sb₂Te₅.

6. The optical disk according to claim 1, wherein a track pitch in the phase change optical disk is less than or equal to about 0.6 µm.

7. The optical disk according to claim 1, wherein a light beam having a wavelength less than or equal to about 690nm is used for writing, erasing or reading information on the phase change optical disk.

8. A phase change optical disk comprising:
a substrate; and
at least a film applied on a side surface of the substrate and including
a first dielectric layer applied on the substrate;
a recording layer applied on the first dielectric layer;
a second dielectric layer applied on the recording layer and having a thickness larger than 100Å and smaller than 350Å; and
a reflection layer applied on the dielectric layer and made of a metal.

9. The phase change optical disk according to claim 8, wherein the reflection layer is made of one selected from copper (Cu), gold (Au) and silver (Ag).

10. The phase change optical disk according to claim 8, wherein a track pitch in the phase change optical disk is less than or equal to about 0.6 µm.

11. The phase change optical disk according to claim 8, wherein a light beam having a wavelength of 690nm is used for writing, erasing or reading information on the phase change optical disk.

12. An optical data storage system comprising:
an optical disk including a substrate, and at least a film applied on a side surface of the substrate and having a recording layer applied over the substrate, a dielectric layer applied on the recording layer and having a thickness larger than 100Å and smaller than 350Å, and a reflection layer applied on the dielectric layer and made of a metal; and
an optical disk drive for using a laser power of 10 ∼ 12mW during writing on the optical disk and for using a laser power of about 1mW during reading from the optical disk.

13. The optical data storage system according to claim 12, wherein the reflection layer is made of one selected from copper (Cu), gold (Au) and silver (Ag).

14. The optical data storage system according to claim 13, wherein the optical data storage system is a phase change optical disk.

15. The optical data storage system according to claim 14, wherein the dielectric layer is made of ZnS (of 80 at. %)-SiO₂(20 at. %), and the recording layer is made of Ge₂Sb₂Te₅.

16. The optical data storage system according to claim 15, wherein a track pitch in the phase change optical disk is less than or equal to about 0.6 µm.

17. The optical data storage system according to claim 13, wherein a light beam having a wavelength less than or equal to about 690nm is used for writing, erasing or reading information on the phase change optical disk.

18. The optical data storage system according to claim 12, wherein the optical disk is a magneto-optical disk.
